Europäisches Patentamt

European Patent Office

Office européen des brevets

(19)

(11) **EP 0 780 404 A2**

(12) **EUROPEAN PATENT APPLICATION**

(43) Date of publication:
**25.06.1997 Bulletin 1997/26**

(51) Int Cl.$^6$: **C08F 10/02**, C08F 2/34

(21) Application number: **96309218.4**

(22) Date of filing: **17.12.1996**

(84) Designated Contracting States:
**AT BE DE ES FR GB GR IT NL PT SE**

(30) Priority: **18.12.1995 US 8683**
**12.12.1996 US**

(71) Applicant: **UNION CARBIDE CHEMICALS & PLASTICS TECHNOLOGY CORPORATION**
**Danbury, Connecticut 06817-0001 (US)**

(72) Inventor: **The designation of the inventor has not yet been filed**

(74) Representative: **Allard, Susan Joyce et al**
**BOULT, WADE & TENNANT**
**27 Furnival Street**
**London EC4A 1PQ (GB)**

(54) **Improvement in fluidized bed reaction systems using unsupported catalyts**

(57) A process is described for increasing the space time yield of polymer production in a fluidized bed reactor employing an exothermic polymerization reaction by cooling the recycle stream to below its dew point and returning the resultant two-phase fluid stream to the reactor to maintain the fluidized bed at a desired temperature above the dew point of the recycle stream.

EP 0 780 404 A2

Printed by Jouve, 75001 PARIS (FR)

**Description**

**FIELD OF THE INVENTION**

This invention relates to a method for improving the space time yield of an exothermic polymerization reaction conducted in a fluidized bed reactor employing an unsupported transition metal catalyst, by increasing the removal of the heat of polymerization from the reactor by cooling gases, continuously removed from the reactor, to a temperature below the dew point temperature of such gases and returning the resultant two phase fluid mixture into the reactor to maintain the temperature of the fluidized bed at the desired level.

**BACKGROUND OF THE INVENTION**

The use of a condensing mode of operation in a continuous gas fluidized bed polymerization was taught in U.S. Patent Nos. 4,543,399 and 4,588,790. That process provided cooling part or all of the recycle stream to form a mixture comprising both a gas phase and a liquid phase prior to reintroducing said stream into the reactor, where the liquid portion of the recycle stream was vaporized. This invention greatly improved the production rate and cooling capacity of the gas phase process.

Recently, U.S. Patent Nos. 5,352,749 and 5,436,304 have disclosed variations on the condensing mode operation.

In U.S. Patent No. 5,317,036 the use of condensing mode was taught for unsupported soluble catalysts. Since that time, condensing mode has also been disclosed for use with supported metallocene catalysts in U.S. Patent Nos. 5,405,922 and 5,462,999.

It has now been found that the use of condensing mode with unsupported soluble catalysts assists the migration of the unsupported catalyst components in a manner not contemplated by the prior art.

**SUMMARY OF THE INVENTION**

The present invention provides a process for increasing the space time yield of polymer production in a fluidized bed reactor employing an exothermic polymerization reaction by cooling the recycle stream to below its dew point and returning the resultant two-phase fluid stream to the reactor to maintain the fluidized bed at a desired temperature above the dew point of the recycle stream. The cooling capacity of the recycle stream is increased both due to the greater temperature differential between the entering recycle stream and the reactor and by the vaporization of the condensed liquids entrained in the recycle stream.

The amount of condensation, and thus the increase in production rate, can be further enhanced by altering the process conditions so as to increase the dew point of the recycle stream.

**DETAILED DESCRIPTION OF THE INVENTION**

In accordance with the present invention there is provided a process for conducting condensing mode with unsupported catalysts. While not limited to any particular type or kind of polymerization reaction (so long as the reaction is of an exothermic nature), this invention is particularly suited to polymerization reactions involving the polymerization of one or more of the monomers listed below:

I. Olefin type: ethylene, propylene, butene-1, pentene-1, 4-methylpentene-1, hexene-1, styrene.
II. Polar vinyl monomer type: vinyl chloride, vinyl acetate; vinyl acrylate, methyl methacrylate, tetrafluoroethylene, vinyl ether, acrylonitrile.
III. Diene type (conjugated and non-conjugated): butadiene, 1,4-hexadiene, isoprene, ethylidene norbornene.
IV. Acetylene type: acetylene, substituted acetylene, such as methyl acetylene.
V. Aldehyde type: formaldehyde.

It is to be noted that the unsupported catalysts employable in the fluidized bed polymerization of the above monomer types would, respectively, most usually be as follows:

I. Coordinated anionic catalyst
II. Cationic catalyst for copolymers with ethylene only; others of this type require a free-radical catalyst
III. Either a free-radical catalyst or a coordinated anionic catalyst
IV. A coordinated anionic catalyst
V. An anionic catalyst

Preferably, the catalyst is of the type disclosed in U.S. Patent Nos. 5,317,036; 5,405,922; 5,462,999 and U.S. Serial No. 08/412,964 filed March 29, 1995. Most preferably, the catalyst is the reaction product of methylaluminoxane or modified methylaluminoxane and a cyclopentadienyl or substituted-cyclopentadienyl zirconium tris alkyl carbamate or carboxylate.

Although this invention is not limited to any specific type of polymerization reaction, the following discussions of the operation of the process are directed to polymerizations of olefin-type monomers where the invention has been found to be especially advantageous.

In very general terms, a conventional fluidized bed process for producing resins, particularly polymers produced from monomers, is practiced by passing a gaseous stream containing one or more monomers continuously through a fluidized bed reactor under reactive conditions and in the presence of a catalyst. The gaseous stream containing unreacted gaseous monomer is withdrawn from the reactor continuously, compressed, cooled and recycled into the reactor. Product is withdrawn from the reactor. Make-up monomer is added to the recycle stream.

The polymer-forming reaction is exothermic, making it necessary to maintain in some fashion the temperature of the gas stream inside the reactor at a temperature not only below the resin and catalyst degradation temperatures, but at a temperature below the fusion or sticking temperature of resin particles produced during the polymerization reaction. This is necessary to prevent plugging of the reactor due to rapid growth of polymer chunks which cannot be removed in a continuous fashion as product. It will be understood, therefore, that the amount of polymer that can be produced in a fluidized bed reactor of a given size in a specified time period is directly related to the amount of heat which can be withdrawn from the fluidized bed.

In accordance with this invention the recycle gas stream is intentionally cooled to a temperature below the dew point of the recycle gas stream to produce a two-phase, gas-liquid mixture under conditions such that the liquid phase of said mixture will remain entrained in the gas phase of said mixture at least from the point of entry into the fluidized bed reactor until volatilized or until passage into the fluidized bed. A substantial increase in space time yield results from the practice of this invention with little or no change in product properties or quality. When practiced as described herein the overall process proceeds continuously and smoothly and without unusual operational difficulties.

It may be desirable in some instances to raise the dew point of the recycle gas stream to further increase heat removal. The recycle stream dew point can be increased by: (1) raising the operating pressure of the reaction system; (2) increasing the concentration of condensible fluids in the recycle stream; and/or (3) reducing the concentration of non-condensible gases in the recycle stream. In one embodiment of this invention, the dew point of the recycle stream may be increased by the addition of a condensible fluid to the recycle stream which is inert to the catalyst, reactants, and the products of the polymerization reaction. The fluid can be introduced into the recycle stream with the make-up fluid or by any other means or at any other point in the system. Examples of such fluids are saturated hydrocarbons, such as butanes, pentanes or hexanes.

A primary limitation on the extent of condensing is the solubility and softening effect of the condensible component on the polymer particles. This is affected by the choice of condensing agent, its concentration, the cycle gas composition reaction conditions such as temperature and pressure, and the molecular weight, density and chain branching distribution of the polymer. Stable condensing operation has been achieved at low and high fluidized bulk densities despite the teachings of U.S. Patent No. 5,352,749.

In practical experience, condensing levels of 20 wt. % and above have been demonstrated while not exceeding the softening limit of the polymer.

The entry point for the two-phase, recycle stream preferably is below the fluidized bed (polymerization zone) to ensure uniformity of the upwardly flowing gas stream and to maintain the bed in a suspended condition. The recycle stream containing entrained liquid is introduced into the reactor at a point in the lower region of the reactor and most preferably at the very bottom of the reactor to ensure uniformity of the fluid stream passing upwardly through the fluidized bed. Other points of entry include any number of ports along the side of the reactor directly into the fluidized bed, with release being at the wall or through a pipe or tube into the body of the bed. Likewise, the entry point can be into the bed from a pipe extending through the distributor plate. Atomization or spray nozzles can be used to distribute the flow into the bed.

A baffle or similar means for preventing regions of low gas velocity in the vicinity of the recycle stream entry point may be provided to keep solids and liquids entrained in the upwardly flowing recycle stream. One such means includes the annular disk as taught in U.S. Patent Nos. 4,877,587 and 4,933,149.

Although there is no apparent advantage in doing so, the two-phase, recycle stream can be divided into two or more separate streams one or more of which can be introduced directly into the polymerization zone provided that sufficient gas velocity below and through the bed is provided to keep the bed suspended. In all cases the composition of the gas stream is kept essentially uniform and flowing in a manner such that there are no dead spaces in the bed where unremovable solids can form.

It will be apparent that if desired, it is possible to form a two-phase fluid stream within the reactor at the point of injection by separately injecting gas and liquid under conditions which will produce a two-phase stream. Little advantage is seen in operating in this fashion due to the added and unnecessary burden and cost of separating the gas and liquid phases after cooling. In WO 94/28032 published December 8, 1994, a contrary view is expressed as to the advantage gained through this mode of operation. It may however, be desirable to inject make-up monomer into the reactor in this fashion. The injection of liquid or gaseous make-up monomer at the point of entry of the two-phase recycle stream or elsewhere in the reactor or in the recycle stream is contemplated by this invention.

The advantages of this invention are not limited to the production of polyolefin resins. This invention can be practiced in connection with any exothermic polymerization process carried out in a gas phase fluidized bed. The advantages of this invention over conventional processes will generally increase in direct relation to the nearness of the dew point temperature of the recycle stream to the reaction temperature within the interior of the fluid bed.

The applicability of this invention to the production of any given polymer can be determined by the use of the following formula:

$$X = \frac{P \cdot H_{rxn}}{G_{mass} \cdot GP_{gas} \, (T_{rxn} - T_{limit})}$$

$P =$ desired polymer production rate; constrained to rates giving X less than 1.0 without subject invention.

$H_{rxn} =$ heat of polymerization of specific polymer being produced.

$G_{mass} =$ mass flow rate of recycle stream; limited to a minimum value by the need for adequate fluidization and mixing in the bed and to a maximum value by entrainment of solids. Specific minima and maxima depend on numerous factors known to those skilled in the art.

$CP_{gas} =$ heat capacity of the recycle stream.

$T_{rxn} =$ temperature of the reaction zone (fluid bed); has maximum value depending on the sticking temperature of the polymer at the pressure of the recycle stream and/or the catalyst performance, and a minimum value which is dependent on catalyst performance.

$T_{limit} =$ minimum temperature of the recycle stream entering the reaction zone. This temperature is either the dew point of the recycle stream or the cooling limit of the heat exchange zone, whichever is higher. If $T_{limit}$ is the recycle stream dew point, the invention is practiced by simply cooling the stream to a temperature below its dew point. If $T_{limit}$ is controlled by the heat exchange zone, the invention is practiced by adding a condensable fluid to increase the dew point of the recycle stream to a temperature above the cooling limit of the heat exchange zone.

Whenever the value of X is greater than 1, the use of this invention will afford a benefit and as the value of X increases, the greater are the benefits which can result from this invention.

In general, the height to diameter ratio of the reaction zone within a reactor varies within the range of about 2.7:1 to about 4.6:1. The range, of course, can vary to larger or smaller ratios depending upon the desired production capacity. The cross-sectional area of the velocity reduction zone is typically within the range of about 2.6 to about 2.8 multiplied -by the cross-sectional area of the reaction zone.

The reaction zone includes a bed of growing polymer particles, formed polymer particles and a minor amount of catalyst particles fluidized by the continuous flow of polymerizable and modifying gaseous components in the form of make-up feed and recycle fluid through the reaction zone. To maintain a viable fluidized bed, the superficial gas velocity through the bed must exceed the minimum flow required for fluidization, and preferably is at least 0.2 ft/sec above minimum flow. Ordinarily, the superficial gas velocity does not exceed 5.0 ft/sec and usually no more than 2.5 ft/sec is sufficient.

It is essential that the bed always contain particles to prevent the formation of localized "hot spots" and to entrap and distribute the particulate catalyst throughout the reaction zone. On start up, the reactor is usually charged with a base of particulate polymer particles before gas flow is initiated. Such particles may be identical in nature to the polymer to be formed or different therefrom. When different, they are withdrawn with the desired formed polymer particles as the first product. Eventually, a fluidized bed of desired polymer particles supplants the start-up bed.

The partially or totally activated precursor composition and/or catalyst used in the fluidized bed is preferably stored for service in a reservoir under a blanket of a gas which is inert to the stored material, such as nitrogen or argon.

Fluidization is achieved by a high rate of fluid recycle to and through the bed, typically in the order of about 50 times the rate of feed of make-up fluid. The fluidized bed has the general appearance of a dense mass of individually moving particles as created by the percolation of gas through the bed. The pressure drop through the bed is equal to or slightly greater than the weight of the bed divided by the cross-sectional area. It is thus dependent on the geometry of the reactor.

Make-up fluid can be fed directly to the bed but more often is fed to the recycle line. When fed to the recycle line it is generally fed before or after either the heat exchanger or cycle gas cooler. The composition of the make-up stream is determined by a gas analyzer. The gas analyzer determines the composition of recycle stream and the composition of the make-up stream adjusted accordingly to maintain an essentially steady state gaseous composition within the reaction zone.

The gas analyzer can be a conventional gas analyzer which rates in conventional manner to indicate recycle stream composition and which is adapted to regulate the feed and is commercially available from a wide variety of sources. The gas analyzer may also be one of the more sophisticated, rapid gas analyzers as disclosed in U.S. Patent No. 5,437,179. Generally, the gas analyzer can be positioned so as to receive gas from a point between the velocity reduction zone and heat exchanger.

To ensure complete fluidization, the recycle stream and, where desired, part of the make-up stream are returned through the recycle line to the reactor below the bed. There may be preferably a gas distributor plate above the point of return to aid in fluidizing the bed. In passing through the bed, the recycle stream absorbs the heat of reaction generated by the polymerization reaction.

At times, the use of aluminoxane has appeared to contribute to the generation of static electricity. Both induced and natural condensing mode operation has been shown to control static. It is believed that this static "dissipation" results primarily from the instantaneous feed rate of the condensing medium, such as, isopentane, to the reactor rather than from the condensation of the isopentane already in the reactor. Thus, changes in the feed rate of the condensing medium can dramatically affect the reactor static. By feeding a spray of the condensing medium directly to the bottom of the distributor plate more liquid hits the plate at a given overall reactor condensing medium concentration than would hit the plate if the condensing medium were fed to the bottom head or recycle line. The advantage of doing this is that a lower amount of condensing medium is required and thus it is easier to avoid flooding the fluidized bed.

The portion of the fluidizing stream which does not act in the bed constitutes the recycle stream which is removed from the polymerization zone, preferably by passing it into velocity reduction zone above the bed where entrained particles are given an opportunity to drop back into the bed.

The recycle stream is then compressed in a compressor and then passed through a heat exchange zone wherein the heat of reaction is removed before it is returned to the bed. The heat exchange zone is typically a heat exchanger which can be of the horizontal or vertical type. The recycle stream is then returned to the reactor at its base and to the fluidized bed through a gas distributor plate. A gas deflector is preferably installed at the inlet to the reactor to prevent contained polymer particles from settling out and agglomerating into a solid mass. The annular disk referred to earlier is one means of accomplishing this.

The temperature of the bed is controlled at an essentially constant temperature under steady state conditions by constantly removing the heat of reaction. No noticeable temperature gradient appears to exist within the upper portion of the bed in polyethylene. In polypropylene a small temperature gradient across the upper bed of about 1 to 2°C is not unusual. A temperature gradient will exist in the bottom of the bed in a layer of about 6 to 12 inches, between the temperature of the inlet fluid and the temperature of the remainder of the bed.

Good gas distribution plays an important role in the operation of the reactor. The fluidized bed contains growing and formed particulate polymer particles, as well as catalyst particles. As the polymer particles are hot and possibly active, they must be prevented from settling, for if a quiescent mass is allowed to exist; any active catalyst contained therein may continue to react and cause fusion. Diffusing recycle fluid through the bed at a rate sufficient to maintain fluidization through the bed is, therefore, important.

A gas distribution plate is a preferred means for achieving good gas distribution and may be a screen; slotted plate, perforated plate, a plate of the bubble-cap type and the like. The elements of the plate may all be stationary, or the plate may be of the mobile type disclosed in U.S. 3,298,192. Whatever its design, it must diffuse the recycle fluid through the particles at the base of the bed to keep the bed in a fluidized condition, and also serve to support a quiescent bed of resin particles when the reactor is not in operation.

The preferred type gas distributor plate is generally of the type which is fabricated from metal and which has holes distributed across its surface. The holes are normally of a diameter of about 1/2 inch. The holes extend through the plate, and over each hole there is positioned a triangular angle iron which is fixedly mounted to plate. The angle irons serve to distribute the flow of fluid along the surface of the plate so as to avoid stagnant zones of solids. In addition they prevent the resin from flowing through the holes when the bed is settled.

Any fluid inert to the catalyst and reactants can also be present in the recycle stream. An activator compound, if utilized, is preferably added to the reaction system downstream from heat exchanger or directly into the fluid bed, possibly with a carrier fluid such as the condensing agent or a liquid monomer.

It is essential to operate the fluid-bed reactor at a temperature below the sintering temperature of the polymer particles to ensure that sintering will not occur. The sintering temperature is a function of resin density. In general, polyethylene low-density resins, for example, have a low sintering temperature and polyethylene high-density resins, for example, have a higher sintering temperature. For example, temperatures of from about 75_C to about 95_C are used to prepare ethylene copolymers having a density of from about 0.91 g/cm$^3$ to about 0.95 g/cm$^3$, while temperatures of from about 100' C to about 115_C are used to prepare ethylene copolymers or homopolymers having a density of from about 0.95 g/cm$^3$ to about 0.97 g/cm$^3$.

The fluid-bed reactor may be operated at pressures of up to about 1000 psi, and is for polyolefin resin production preferably operated at a pressure of from about 100 psi to about 100 psi, with operation at the higher pressures in such ranges favoring heat transfer since an increase in pressure increases the unit volume heat capacity of the gas.

The partially or totally activated precursor composition and/or catalyst (hereinafter collectively referred to as catalyst) is injected into the bed at a rate equal to its consumption. Preferably, the catalyst is injected at a point in the bed where good mixing of polymer particles occurs. Injecting the catalyst at a point above the distribution plate is an important feature for satisfactory operation of a fluidized bed polymerization reactor. Since catalysts are highly active, injection of the catalyst into the area below the distributor plate may cause polymerization to begin there and eventually cause plugging of the distributor plate. Injection into the fluidized bed, instead, aids in distributing the catalyst throughout the bed and tends to preclude the formation of localized spots of high catalyst concentration which may result in the formation of "hot spots." Injection of the catalyst into the reactor above the bed may result in excessive catalyst carryover into the recycle line where polymerization may begin and plugging of the line and heat exchanger may eventually occur.

The catalyst can be injected into the reactor by various techniques. Not all modes of spraying the unsupported catalysts were found to be equally effective. In some operational modes spraying catalyst directly into the bed coated the resin particles and caused them to grow uncontrollably. Several modes of preferred operation were found. One mode involved separately feeding the organometallic complex and the activator. Yet another preferred mode resulted from feeding the combined components into the reactor but allowing sufficient time for the sprayed particles to begin evaporation before contacting the bed particles. In yet another preferred mode the two components were fed in a carrier that allowed them to begin losing solubility while they were being fed and resulted in nucleating active catalysts as the feed was entering the reactor. It is believed that the use of an atomization nozzle into the bed with a large oversized support tube flow tends to prevent fouling. Similarly, the use of an atomization nozzle through the distributor plate so that catalyst is fed just above the plate also tends to prevent fouling. At this stage it is not clear which is the best.

One problem encountered with soluble catalyst feed is that the catalyst droplets collide with polymer powder in the fluid bed and coat the polymer particles. Subsequent polymerization leads to powder particles of larger and larger size. This effect is greatly attenuated and managed by forming a solid catalyst particle from the reaction of the metallocene compound and aluminoxane compound as they are being fed to the reactor.

The metallocene catalyst, is often provided as a dilute solution in aliphatic or aromatic hydrocarbon such as toluene or isopentane. The aluminoxane can also be in an aliphatic or aromatic hydrocarbon such as iisopentane or toluene. Each are continuously added to the reactor (or intermittently), and are premixed prior to entering with a carrier fluid of isopentane or other inert hydrocarbon. Additionally, an inert gas such as nitrogen can be added to act as a carrier gas for spraying or dispersing the catalyst into the reactor vessel. The metallocene compound and the aluminoxane compound react under this scenario to form the active catalyst species which may be insoluble in the isopentane carrier. This precipitates as a fine solid of only a few microns in diameter (or less) which is conveyed the rest of the way into the reactor as a slurry in isopentane. The reaction and subsequent precipitation appears to be very fast. The adduct is soluble in toluene, and although there may be toluene present, there is much more isopentant so that it precipitates. This improves the morphology of polymer prepared by the soluble metallocene catalysts feed to gas phase reactors. The catalyst and aluminoxane compound can react to form a particle insoluble in the carrier fluid, and this particle acts as the template for polymerization leading to polymer powder having good morphology, good resin bulk density and good flow characteristics. Fouling of the reactor is also reduced. Use of this templated liquid feed catalyst reduces fouling when operating over the full range of condensing-mode.

Similarly, aluminoxane or other activator in a toluene solution may be used and can be precipitated by contacting with the carrier isopentane. This can be done prior to where the catalyst mixes with the isopentane carrier, at the same location the catalyst is added the carrier, or downstream of where the catalyst is injected into the carrier isopentane. The catalyst particles can be sprayed into the reactor using an atomization nozzle with isopentane and nitrogen as the carrier fluids. The spray can be directed upwards from the bottom of the reactor with no distributor plate in place. Therefore, there is only a small distance that the particles must travel before impacting the bed. In this time, the carrier fluid has evaporated leaving the catalyst particles precipitated in clusters. Even if the carrier does not evaporate, the precipitated catalyst particles tend to disperse. Feeding catalyst in this manner is not a criteria for this invention. If can be feed also directly to the bed if provisions are made to properly disperse the catalyst at the polymer tip.

Alternatively, at least some organometallic complexes and aluminoxane activators need not be precontacted to give good catalyst productivity and resin or good morphology. Specifically what has been demonstrated is that via specialized feeding the catalyst components into the reactor new discrete resin particles are formed in the fluidized bed without run-away resin particle agglomeration. Operation in condensing mode, or even with high levels of condensable components while not in condensing, is beneficial in that it allows the solvation and migration of the catalyst precursors throughout the polymer being formed. (The precursors must find each other to make the active catalyst for polymerization). A dramatic increase in catalyst productivity can be obtained as the isopentane concentration is increased so that the cycle gas dew point increases from 20 to 33°C. This demonstrates the benefit of the invention at higher isopentane levels, particularly when operating in condensing mode. Very high levels of condensing, say above 25 wt% may be of further benefit in assisting catalyst precursor migration and the establishment of the active site.

As noted above, reaction of the catalyst precursors to form an insoluble adduct in the condensing component may provide the template for polymer growth and particle replication. Experience shows that the primary resin particles are generally spherical in shape and solid with a diameter ranging from about 10 to 100 microns. These particles may be agglomerated into larger particles. One advantage of the spraying of the catalyst into the reactor is the ability to control the size of the particles generated. Via control of the spray nozzle design and the velocity of the carrier or carriers a large range of particle sizes can be achieved. This is especially advantageous when balancing catalyst productivity needs with thermal sensitivity aspects of catalysts. It is also beneficial to increase the size of polymer particles when lowering the bed volume when transitioning between products during production runs.

There are several additional advantages for adducts that are soluble. One is that as the sprayed particle's solvent evaporates the desolubilized components can form a template which can lead to improved morphology. Additionally, the initial polymerization tends to form a rigid framework that can also serve as a template for the resin particle.

Unsupported catalysts are not required to be bound to a non-mobile attachment like a supported catalyst. The mobility of the unsupported catalyst is enhanced by operating in the condensed mode as the liquid helps disperse the catalyst components allowing improved mixing of the components and high efficiency of catalyst formation. Further diffusion of catalyst within the particle is aided by swelling of the polymer by the condensing agent. The organometallic complex and activator are more uniformly dispersed throughout the resin particles, resulting in improved catalyst productivity and product uniformity (homogeneity). This concept of swelling the polymer aiding catalyst/activator dispersion also applies to an insoluble adduct catalyst if the individual components that must react to form the insoluble catalyst are themselves soluble in the condensing media.

Another way to achieve the benefit of this invention is to use an activator that precipitates or gellates in the polymerization vessel (or prior to placement in the reactor) prior to reaction with the procatalyst. This precipitation can be caused by formation of a discontinuous phase by the condensing media. For example, regular aluminoxane is often provided in toluene and is insoluble in isopentane. It can be precipitated in the feed line by mixing with, for example, and isopentane stream. It may also precipitate in the reactor as the toluene is dispersed via mixing with the condensing agent which is often isopentane. Operation in condensing mode will lead to the aluminoxane's precipitation. Other ways to precipitate the aluminoxane include reaction with a flocculating agent such as a disfunctional molecule, a polar substance (e.g. $MgCl2$) or a surfactant. The precipitated aluminoxane will then act as an excellent template for polymer replication and growth. Operation at high condensing levels aids in swelling the polymer and the dispersion of the metallocene procatalyst across the aluminoxane particle.

Modified aluminoxane is soluble to some degree in isopentane, yet it may lose solubility rapidly in the absence of the condensing medium, such as liquid isopentane. This condition may exist in the fluid bed of polymer particles even during condensing mode operation. The condensed liquid does not necessarily penetrate the entire height of the bed, so that there is a "dry" region at the top and some length down into the bed. The constant movement of the procatalyst, activator and newly formed resin particle into and out of "dry" and "wet" zones may improve dispersion of the catalyst components throughout the particle and also provide a stable template for particle growth without runaway agglomeration. In theory, the extent of condensing can be used to control the resin particle size and morphology.

Addition to a "dry" zone should provide rapid nucleation and better particle characteristics. Addition to a "wet" zone should provide improved catalyst productivity, cooling of the particle to prevent hot spotting, fouling reduction and control of resin agglomeration.

The aluminoxane may also be provided in supercritical solvent such as ethylene or ethane (there is an obvious advantage for using ethylene since it is a monomer). The aluminoxane would precipitate very quickly forming a template for polymer replication.

The aluminoxane can be first added through an atomization nozzle to the bottom cone with the distributor plate removed, and the metallocene cocatalyst can be added by an injection tube through the side of the reactor to the bed. The aluminoxane feed can also be moved directly to the fluid bed with a distributor plate in place. The catalyst feed tube is preferably fed into the bed about six inches below the aluminoxane feed tube, but their locations can be reversed or moved further apart. These can be reversed, separated further or brought closer together to effect the process or catalyst advantages. Simple necked down injection tubes can also be used with appropriate carrier liquid and gas flows to each. It is important to note that precontacted procatalyst and aluminoxane often leads to massive fouling of such injection tubes when inserted directly into the fluid bed.

Additionally, aluminoxane might be added directly to the cycle line before the distributor plate. Condensing operation may help in flushing the aluminoxane into the reactor if added to the cycle line.

Solution feeding of homogeneous polymerization catalysts to a fluidized bed can be complicated by coating of existing particles with new polymer growth, or by "skinning over" of droplets which leads to lower activity. This can be avoided by segregating the catalytically active sites into discrete domains, separated by regions that are catalytically inactive. This results in maximum surface-to-volume ratio for the incipient catalyst sites which leads to maximum rates.

Catalyst segregation can be achieved in several ways. One way is to use emulsions of a given catalyst component, such as, an emulsion of methylaluminoxane in a saturated hydrocarbon. The emulsions can be created and stabilized by a number of techniques in order to favorably influence the nature of the ensuing polymerization. An example of emulsion creation would be to add mineral oil to a toluene solution of aluminoxane and then strip the toluene.

Another way to achieve catalyst segregation would be to premix the catalyst components and then add a co-solvent in which the resulting mixture is insoluble. An example of this is where the metallocene is mixed with aluminoxane/toluene and mineral oil.

Another way to achieve catalyst segregation is to add a component that reacts with one of the catalyst components and causes them to become insoluble. An example of such a component might be a di- or tri-functional molecule such as ethylene glycol, which would lead to cross-linking and subsequent insolubility of the aluminoxane.

Another way to achieve catalyst segregation would be to add small amounts of an attractant component, which through favorable intermolecular interactions causes one or more catalyst components to cluster about this component.

The catalyst is preferably fed into the reactor at a point from about 20 to 50 percent of the reactor diameter away from the reactor wall and below the fluidized bed or at the bed at a height of up to about 50 percent of the height of the bed. The catalyst may likewise be fed at or right above the distributor plate at a point from about 20 to 50 percent of the reactor diameter away from the reactor wall and at any of a multiple of locations in or right above the distributor plate.

A gas which is inert to the catalysts such as ethane, nitrogen or argon, is preferably used to carry the catalyst into the bed.

The rate of polymer production in the bed depends on, among other things, the rate of catalyst injection, the amount of condensing medium and the concentration of monomer(s) in the recycle stream. The production rate is conveniently controlled by simply adjusting the rate of catalyst injection.

Since any change in the rate of catalyst injection will change the reaction rate and hence rate of generation of the heat of reaction, the temperature of the recycle stream entering the reactor is adjusted upwards and downwards to accommodate any change in the rate of heat generation. This ensures the maintenance of an essentially constant temperature in the bed. Complete instrumentation of both the fluidized bed and the recycle stream cooling system is, of course, useful to detect any temperature change in the bed so as to enable either the operator or a conventional automatic control system to make a suitable adjustment in the temperature of the recycle stream.

Under a given set of operating conditions, the fluidized bed is maintained at essentially a constant height or weight by withdrawing a portion of the bed as product at the rate of formation of the particulate polymer product. Since the rate of heat generation is directly related to the rate of product formation a measurement of the temperature rise of the fluid across the reactor (the difference between inlet fluid temperature and exit fluid temperature) is indicative of the rate of particulate polymer formation at a constant fluid velocity if no vaporizable liquid is present in the inlet fluid.

On discharge of particulate polymer product from the reactor, it is desirable and preferable to separate fluid from the product and to return the fluid to the recycle line. There are numerous ways known to the art to accomplish this. See U.S. Patent No. 4,543,399. Another preferred product discharge system which may be alternatively employed is that disclosed in U. S. Patent No. 4,621,952. Such a system employs at least one (parallel) pair of tanks comprising a settling tank and a transfer tank arranged in series and having the separated gas phase returned from the top of the settling tank to a point in the reactor near the top of the fluidized bed.

The fluidized-bed reactor is equipped with an adequate venting system to allow venting the bed during start up and shut down. The reactor does not require the use of stirring and/or wall scraping. The recycle line and the elements therein should be smooth surfaced and devoid of unnecessary obstructions so as not to impede the flow of recycle fluid or entrained particles.

Among the polymers which may be produced in the process of the present invention are homopolymers of ethylene, propylene, butene or copolymers of a major mole percent of ethylene- propylene or butene and a minor mole percent of one or more $C_2$ to $C_8$ alpha-olefins. The $C_2$ to C8 alpha-olefins preferably should not contain any branching on any of their carbon atoms which is closer than the fourth carbon atom. The preferred $C_2$ to $C_8$ alpha-olefins are ethylene, propylene, butene-1, pentene-1, hexene-1, 4-methylpentene-1 and octene-1.

The ethylene polymers, for example, have a melt flow ratio of over about 22. The melt flow ratio value is another means of indicating the molecular weight distribution of a polymer. A melt flow ratio (MFR) of 22 thus, for example, corresponds to a Mw/Mn value (as determined by conventional size exclusion chromatography) of about 2.7.

The ethylene homopolymers have a density of about $\geq 0.958$ to $< 0.972$ gm/cc.

The ethylene copolymers have a density less than about 0.96 gm/cc. The density of the ethylene copolymer, at a given melt index level for the copolymer, is primarily regulated by the amount of the $C_3$ to $C_8$ comonomer which is copolymerized with the ethylene. In the absence of the comonomer, the ethylene would homopolymerize to provide polymers having a density of about $\leq 0.96$. Thus, the addition of progressively larger amounts of the comonomers to the copolymers results in a progressive lowering of the density of the copolymer. The amount of each of the various $C_3$ to $C_8$ comonomers needed to achieve the same result will vary from monomer to monomer, under the same reaction conditions.

Thus, to produce binary copolymers of ethylene with the same density and melt index, larger molar amounts of the different comonomers would be needed in the order of $C_3>C_4>C_5>C_6>C_7>C_8$.

When made in the fluid-bed process described herein, ethylene polymers are granular materials which have a settled bulk density of about 15 to 32 pounds per cubic foot and an average particle size of the order of about 0.005 to about 0.10 inches preferably about 0.06 to 0.10 inches. Particle size is important for the purposes of readily fluidizing the polymer particles in the fluid-bed reactor, as herein described.

Whereas the exact scope of the instant invention is set forth in the appended claims, the following specific examples illustrate certain aspects of the present invention and, more particularly, point out methods of evaluating the same. However, the examples are set forth for illustration only and are not to be construed as limitations on the present invention except as set forth in the appended claims. All parts and percentages are by weight unless otherwise specified.

Example 1 and 1A

Catalyst

$\eta^5$-indenyl zirconium tris(diethyl carbamate) catalyst as a 0.025 Molar solution in toluene. Approximately 1 liter of catalyst is prepared and placed in a continuously stirred vessel under a purified nitrogen blanket at 400 psi pressure. Catalyst is withdrawn from the vessel and added to the reactor continuously using a high pressure syringe pump.

The catalyst feed rate of 7.5 cc/hr of catalyst solution is controlled by the syringe pump. Flows of isopentane and nitrogen at rates of 0.8 lb/hr and 7.0 lb/hr respectively carry the catalyst into the reactor.

The catalyst and carriers entered the reactor through a 1/8 inch injection tube with the tip diameter reduced to 0.041 inch to aid in atomization and dispersion. The injection tube is inserted 2.0 feet above the plate and about 3 inches into the bed.

Activator

Modified methyl aluminoxane (MMAO-3A) as a 13 wt% solution in isopentane (Akzo Nobel, diluted from a 26 wt% solution) is added at a rate of 100 cc/hr to the reactor through a 1/8 inch injection tube with the tip diameter reduced to 0.041 inch. Isopentane carrier at a rate of 0.8 lb/hr and nitrogen carrier at a rate of 5.0 lb/hr aided the MMAO-3A's dispersion and atomization in the reactor. The MMAO-3A is added to the bed 1.5 ft above the distributor plate (6 inches below the catalyst feed tube) and about 4 inches into the bed.

Reactor

The 14 inch diameter reactor is used with an 85 lb bed weight and an approximate bed height of 8 ft. Monomers and other cycle gas components are added to the reactor at the compressor case behind the impeller. An additional isopentane allows the control of the cycle gas dew point independently of the catalyst and activator carrier flows.

Start-Up

The reactor is opened prior to the experiment. To prepare it for polymerization, the reactor and a LLDPE seed bed are dried to about 10 ppm water in the cycle gas using hot nitrogen. About 500 cc of 5 wt% TiBA in isopentane is circulated for an hour and the reactor vented to flare prior to introducing monomer. MMAO-3A addition is started about 30 minutes before catalyst feed begins.

Conditions

| | |
|---|---|
| Total Pressure, psig | 375 |
| Ethylene Partial Pressure, psi | 180 |
| Hydrogen Partial Pressure, psi | 0 |
| Hexene Partial Pressure, psi | 5.9 |
| Isopentane Partial Pressure, psi | 22.0 (5.65 mole %) |
| Nitrogen Partial Pressure, psi | 182 |
| $H_2/C_2$ Mole Ratio | 0.0 |
| $C_6/C_2$ Mole Ratio | 0.015 |
| Bed Temperature, °C | 70 |
| Inlet Gas Temperature, °C | 69.5 |
| Cycle Gas Dew Point, °C | 41.2 |

| | |
|---|---|
| Cycle Gas Velocity, ft/sec | 1.20 |
| Production Rate, lb/hr | 16 |
| Average Residence Time, hr | 5.3 |
| STY , lb/hr/ft3 | 2.0 |

Veratrole (1,2-dimethoxy benzene) is added to the cycle gas line at the compressor suction to reduce fouling of the cycle gas line, compressor and cycle gas cooler. The feed rate is about 50 cc/hr of a 0.01 wt % solution in isopentane.

Resin

A polymer is produced with an I2 melt index of 0.86 dg/min, an I21 flow index of 16.2 dg/min, and a density of 0.9265 g/cc. The resin particle size is 0.075 inch, the resin bulk density is 18.5 lb/ft3 and the fluidized bulk density is 9.5 lb/ft3.

The comparative commercial performance at a 30 °C inlet gas temperature corresponds to a condensing level of 8.7 wt%.

Condensing levels for a range of inlet gas temperatures are summarized below:

| Inlet Gas Temp. °C | Liquid Condensed, wt% |
|---|---|
| 35 | 6.8 |
| 30 | 8.7 |
| 20 | 12.0 |
| -10 | 19.3 |

Increasing the isopentane concentration from 5.65 mole% (22 psi) to 8 mole% (31.2 psi) allows for 20.4 wt% condensing with a 10 °C inlet gas temperature.

Further increasing the isopentane concentration to 11 mole% (42.9 psi) achieves 22.6 wt% condensing with a 25 °C inlet gas temperature. This temperature is well within the capability of a commercial UNIPOL® plant with refrigerated cooling.

For conditions used in both examples above, the level of nitrogen is decreased to accommodate the additional isopentane, resin bulk properties changes slightly and the dew point is higher.

## Claims

1. A continuous process for the production of polymer in a gas phase reactor from one or more fluid monomers by continuously passing a gaseous stream through said reactor in the presence of an unsupported soluble catalyst under reactive conditions, withdrawing polymeric product and unreacted fluids, cooling part or all of said unreacted fluids to a temperature below the dew point thereof to form a two-phase mixture of gas and entrained liquid and reintroducing said two-phase mixture into said reactor together with sufficient additional monomers to replace those monomers polymerized and withdrawn as product.

2. A process as claimed in claim 1 wherein the dew point of the gas recycle stream is raised.

3. A process as claimed in claim 2 wherein the dew point is raised by (1) raising the operating pressure of the reaction system; (2) increasing the concentration of condensible fluids in the recycle stream; and/or (3) reducing the concentration of non-condensible gases in the recycle stream.

4. A process as claimed in any one of the preceding claims wherein the polymer produced is a polyolefin.

5. A process as claimed in any one of the preceding claims wherein the temperature of the bed is controlled at an essentially constant temperature under steady state conditions.